# EUROPEAN PATENT APPLICATION

(11) **EP 1 008 894 A1**
(43) Date of publication of application: **14.06.2000**
(21) Application number: 98935330.5
(22) Date of filing: 03.08.1998
(51) Int. Cl.: G02F 1/1335, G04G 9/00, G04G 9/06

(54) **TIMEPIECE**

(30) Priority: 01.08.1997 JP 20746097
(71) Applicant: Citizen Watch Co., Ltd., Tokyo 163-0428 (JP)
(72) Inventor: AKIYAMA, Takashi, Citizen Watch Co., Ltd., Tokorozawa-shi, Saitama 359-8511 (JP); IDE, Masafumi, Citizen Watch Co., Ltd. Tech. Lab., Tokorozawa-shi, Saitama 359-8511 (JP)
(74) Representative: Prüfer, Lutz H., Dipl.-Phys.
(86) International application number: JP9803446
(87) International publication number: WO9906883

(57) **Abstract**

In a timepiece provided with a backlight, a liquid crystal display panel (10), capable of displaying at least either time information or calendar information, is made up of a liquid crystal layer (5) sealed in a gap formed between a first substrate (1) and a second substrate (4), both transparent, with an electrode formed on each of inner surfaces thereof, facing each other, and an absorption-type polarizing film (2) absorbing the light linearly polarized in the direction orthogonal to the transmission axis thereof is disposed on the outer side of the first substrate (1) installed on the visible side of the liquid crystal display panel (10) while a reflection-type polarizing film (3) reflecting the light linearly polarized in the direction orthogonal to the transmission axis thereof is disposed on a side of the second substrate (4), opposite from the visible side, and the backlight (8) is installed on the outer side of the reflection-type polarizing film (3), so that time information and so forth are visually recognizable with good contrast even when the backlight is not lit up.

## Description

### TECHNICAL FIELD

The invention relates to a timepiece such as a wrist watch, a desk clock, and the like, for displaying time information and calendar information by use of a liquid crystal display panel, and more particularly, to a timepiece provided with a backlight for indicating transmission type display.

### BACKGROUND TECHNOLOGY

A timepiece for indicating digital display of time information such as an hour, minute, and second, and calendar information such as a year, month, date, days of the week, has been in widespread use as a digital wrist watch, or desk clock. Such digital display is mostly executed by use of a liquid crystal display panel.

In some of the liquid crystal display panels, supertwisted nematic (STN) liquid crystals are in use, however, in most of the liquid crystal display panels, twisted nematic (TN) liquid crystals are in use.

Either in the case of using the STN liquid crystals or in the case of using the TN liquid crystals, a polarizing film is used in combination with the liquid crystal for providing good contrast in effecting actual display, and the polarizing film used in the liquid crystal display panel is an absorption-type polarizing film absorbing light linearly polarized in the direction orthogonal to the transmission axis thereof.

This type of liquid crystal display panel is used in most of common digital timepieces. Such liquid crystal display panels respectively combined with a light-emitting diode (LED) as a backlight are known to provide a sense of fun in design, and are commercialized in large numbers.

There are cited a number of reasons for combining the liquid crystal display panels with the LEDs as a backlight, such as the fact that the LEDs are too expensive to execute all digital display by use of them, the cost of the liquid crystal display panel is lower than the cost of the LEDs corresponding in number to segments for use in executing all digital display, and use of liquid crystals enables finer patterns to be displayed than by use of the LEDs.

In the case of using the liquid crystal display panel in combination with the LEDs as a backlight thereof, a few units of the LEDs will suffice for digital display although it will depend on a surface area of a display part. Further, in terms of power consumption, use of the liquid crystal display panel is by far lower than and has an advantage over the case of executing all digital display by the LEDs only.

Now, a conventional timepiece provided with a liquid crystal display panel and LEDs as a backlight is described in more detail hereinafter with reference to the accompanying drawings.

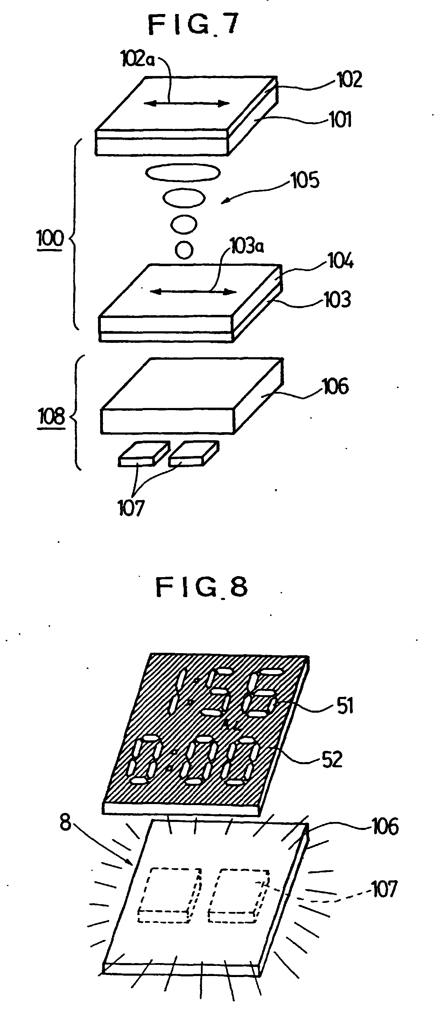

Fig. 7 is a schematic perspective view showing a configuration example of a digital display portion of a conventional timepiece for displaying time information, calendar information, and so forth.

A TN liquid crystal layer 105 having a twist angle of 90 degrees is sealed in a gap formed and sandwiched between a first glass substrate 101 and a second glass substrate 104, by a sealant (not shown), with a transparent electrode (omitted in the figure) formed on respective inner surfaces thereof, facing each other, thereby making up a liquid crystal display panel 100.

A first absorption-type polarizing film 102 is disposed on the outer side of the first glass substrate 101 on the visible side of the liquid crystal display panel 100, and a second absorption-type polarizing film 103 is disposed on the outer side of the second glass substrate 104.

The first and second absorption-type polarizing films 102, 103, and the liquid crystal display panel 100 are disposed such that the transmission axis 102a of the first absorption-type polarizing film 102 is parallel to the direction of the long axes of liquid crystal molecules on the first glass substrate 101 side of the TN liquid crystal layer 105 while the transmission axis 103a of the second absorption-type polarizing film 103 is orthogonal to the direction of the long axes of liquid crystal molecules on the second glass substrate 104 side of the TN liquid crystal layer 105.

A backlight 108 comprising a light diffusing layer 106 and two units of red LEDs 107 is disposed on a side of the second absorption-type polarizing film 103, opposite from the visible side. For the light diffusing layer 106, a thick plate made of polycarbonate or acrylic resin, a thick paper, or an adhesive containing grains to provide light diffusibility is used, and an embossing treatment is applied thereto as necessary in order to enhance light diffusibility.

With a configuration wherein the liquid crystal display panel 100, and the two absorption-type polarizing films 102, 103 are disposed as above, a display mode, called normally-black display, is effected wherein transmission display of letters indicating time, and so forth is indicated against the background in black.

Fig. 8 shows a display condition in the case wherein the backlight is lit up. When the red LEDs 107 of the backlight are lit up with the configuration as shown in Fig. 7, a light component linearly polarized in the direction parallel to the transmission axis of the second absorption-type polarizing film 103, out of light emitted from the red LEDs 107, is transmitted through the second absorption-type polarizing film 103. Since display letters 51 shown in Fig. 8 represent portions of the liquid crystal display panel 100, where a voltage is applied between the electrodes (not shown), the linearly polarized light is transmitted through the TN liquid crystal layer 105 without being twisted, and then transmitted through the first absorption-type polarizing film 102 as the light linearly polarized in the direction parallel to the transmission axis thereof, thus reaching the visible side, so that display by red emitted light is effected.

On the other hand, in a background part 52 shown in Fig. 8, representing a portion of the liquid crystal display panel 100, where no voltage is applied between the electrodes, the linearly polarized light which is transmitted through the second absorption-type polarizing film 103 is twisted by 90 degrees while being transmitted through the TN liquid crystal layer 105, and turns into the light linearly polarized in the direction orthogonal to the transmission axis of the first absorption-type polarizing film 102, thereby being absorbed by the first absorption-type polarizing film 102, so that display in black is effected.

Thus, in the case of the configuration shown in Fig. 7, when the red LEDs 107 of the backlight 108 are lit up, the light emitted from the red LEDs 107 is transmitted through the portions of the display letters 51 only, so that letters are displayed in red within the background part indicated in black.

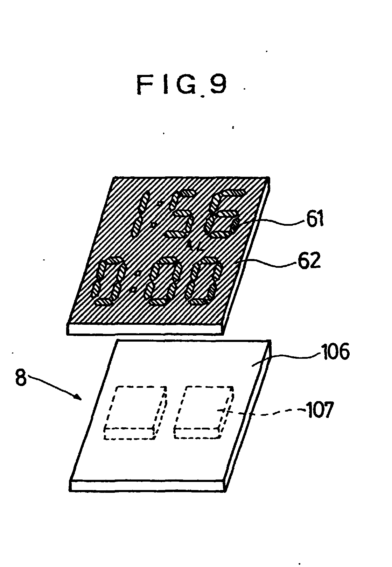

Next, a condition of the liquid crystal display panel 100 when the backlight is not lit up is described hereinafter. Fig. 9 shows a display condition when the backlight is not lit up.

With the configuration as shown in Fig. 7, if the red LEDs 107 of the backlight 108 are not lit up, a light component linearly polarlized in the direction parallel to the transmission axis of the first absorption-type polarizing film 102, out of light incident from the visible side is transmitted through the first absorption-type polarizing film 102. Since display letters 61 shown in Fig. 9 represent portions of the liquid crystal display panel 100, where a voltage is applied between the electrodes, the linearly polarized light is transmitted through the TN liquid crystal layer 105 without being twisted, and then transmitted through the second absorption-type polarizing film 103 as the light linearly polarized in the direction parallel to the transmission axis thereof, then reaching the light diffusing layer 106 of the backlight 108. The linearly polarized light that is incident on the light diffusing layer 106 is simply diffused in the direction of the red LEDs 107, and since there is not disposed a reflection layer exhibiting a strong reflectivity underneath the light diffusing layer 106, display in black is effected.

In a background part 62 shown in Fig. 9, representing a portion of the liquid crystal display panel 100, where no voltage is applied between the electrodes, the linearly polarized light which is transmitted through the first absorption-type polarizing film 102 is twisted by 90 degrees when transmitted through the TN liquid crystal layer 105, and turns into the light linearly polarized in the direction orthogonal to the transmission axis of the second absorption-type polarizing film 103, thereby being absorbed by the second absorption-type polarizing film 103, so that display in black is effected.

Accordingly, in a state wherein the backlight is not lit up with the configuration as shown in Fig. 7, both the portions of the display letters 61 and the portion of the background part 62 are displayed in black.

Thus, with the conventional digital timepiece by use of the liquid crystal display panel, using the LEDs or the like as a light source for the backlight, in the case of reflection type display by use of external light, display of time as well is indicated in black against the background in black as shown in Fig. 9, causing a problem that contrast can not be provided. That is, unless the backlight is lit up, it is impossible to visually recognize display of the time, date, and so forth.

This is attributable to the fact that a polarizing film used in the conventional liquid crystal display panel is an absorption-type polarizing film, and when the same is used in combination with the TN liquid crystals, display is effected by switching over into black by either transmission of light or absorption thereof by the polarizing film. More specifically, in Fig. 9, the background part 62 is displayed in black through absorption of light by the polarizing film while the display letters 61 are displayed in black due to the effect of the light diffusing layer 106. Accordingly, contrast can not be provided, rendering it difficult to visually recognize letters. As a result, every time it becomes difficult to visually recognize letters, the backlight has to be lit up to check display of time and so forth. This will not only impair operating ease but also result in an increase of power consumption, thereby posing a major problem with the conventional timepiece.

### DISCLOSURE OF THE INVENTION

The invention has been developed to solve the problems described in the foregoing, and it is an object of the invention to provide a timepiece using a liquid crystal display panel, whereby time information, calendar information, and so forth can be displayed with good contrast so as to be visually recognizable even when a back light is not lit up.

The timepiece according to the invention comprises a liquid crystal display panel, made up of a liquid crystal layer sealed in a gap formed between a first substrate and a second substrate, both transparent, with an electrode formed on each of inner surfaces thereof, facing each other; and capable of displaying at least either time information or calendar information, a first polarizing film disposed on the outer side of the first substrate installed on the visible side of the liquid crystal display panel, a second polarizing film disposed on the outer side of the second substrate, and a backlight installed on a side of the second polarizing film, opposite from the visible side. Further, in order to achieve the object described above, the following configuration is adopted.

The first polarizing film is made up of an absorption-type polarizing film absorbing the light linearly polarized in the direction orthogonal to the transmission axis thereof, a reflection-type polarizing film reflecting the light linearly polarized in the direction orthogonal to the transmission axis thereof, or the absorption-type polarizing film in combination with the reflection-type polarizing film.

And the second polarizing film is made up of the reflection-type polarizing film or the absorption-type polarizing film in combination with the reflection-type polarizing film.

It is preferable that the first polarizing film is an absorption-type polarizing film absorbing the light linearly polarized in the direction orthogonal to the transmission axis thereof, and the second polarizing film is a reflection-type polarizing film reflecting the light linearly polarized in the direction orthogonal to the transmission axis thereof.

Further, if the liquid crystal layer sealed in the gap formed between the first substrate and the second substrate is composed of twisted nematic liquid crystals having a twist angle not greater than 90 degrees, the absorption-type polarizing film is preferably disposed relative to the liquid crystal display panel such that the transmission axis thereof is aligned substantially parallel or orthogonal to the direction of the long axes of liquid crystal molecules, located on the visible side of the twisted nematic liquid crystals while the reflection-type polarizing film is preferably disposed relative to the liquid crystal display panel such that the transmission axis thereof is aligned substantially parallel or orthogonal to the direction of the long axes of liquid crystal molecules, located on the backlight side of the twisted nematic liquid crystals.

If the liquid crystal layer sealed in the gap formed between the first substrate and the second substrate is composed of supertwisted nematic liquid crystals having a twist angle ranging 180 degrees to 270 degrees, a retardation film is preferably installed between the first substrate of the liquid crystal display panel and the absorption-type polarizing film.

In the timepieces described in the foregoing, a light diffusing layer is preferably installed on the liquid crystal display panel side of the reflection-type polarizing film. For the absorption-type polarizing film above-described, a color polarizing film using a dichroic pigment may be used.

The backlight is preferably made up of a light source such as light emitting diodes, an electro-luminescence light, or the like, and the light diffusing layer for diffusing light emitted by the light source.

The light diffusing layer may be made up of a coating comprised of a transparent adhesive with silica grains or acrylic grains diffused therein. Otherwise, a color filter may be used as the light diffusing layer.

With the timepiece according to the invention, wherein the reflection-type polarizing film is installed on the backlight side of the liquid crystal display panel, reflection-type display by use of external light can be effected with good contrast while display by transmission illumination by use of the backlight can be effected as well, providing sufficient brightness.

### BRIEF DESCRIPTION OF THE DRAWINGS

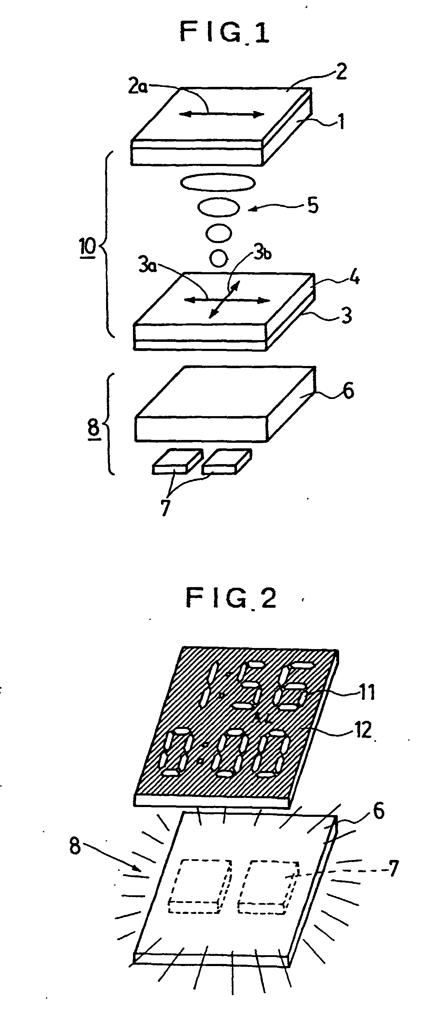

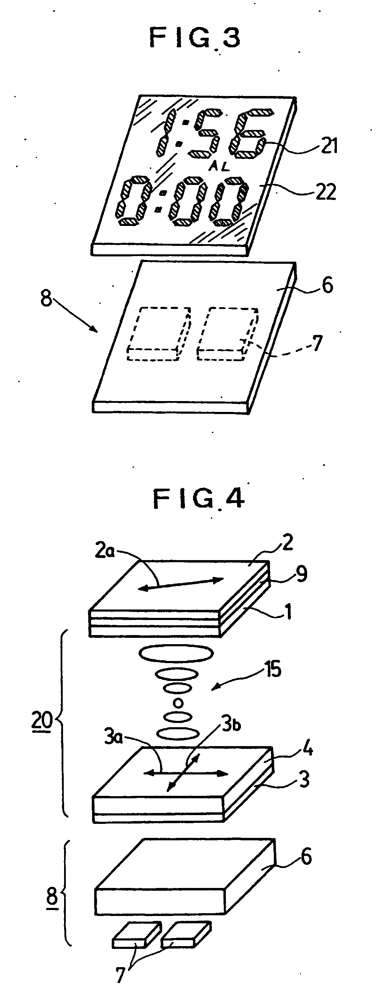

Fig. 1 is a schematic perspective view showing a first embodiment of a timepiece according to the invention. Fig. 2 is a schematic perspective view showing a display condition of the timepiece when a backlight thereof is lit up, Fig. 3 is a schematic perspective view showing a display condition of the timepiece when the backlight thereof is not lit up.

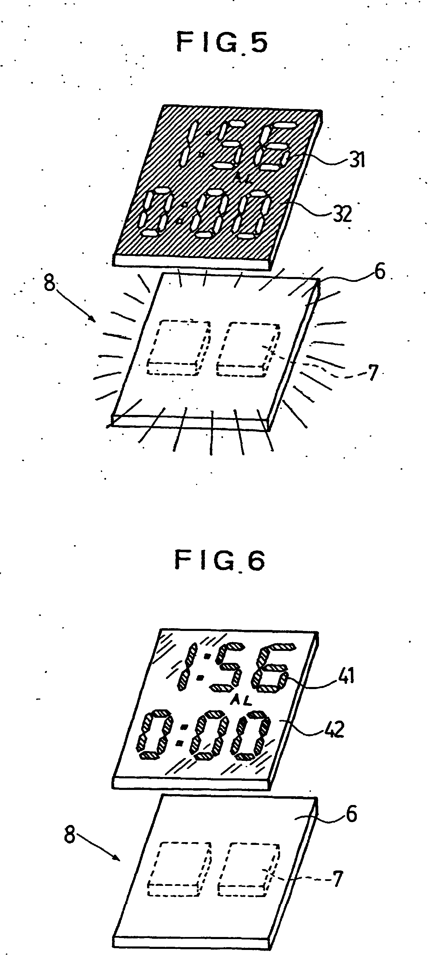

Fig. 4 is a schematic perspective view showing a second embodiment of a timepiece according to the invention. Fig. 5 is a schematic perspective view showing a display condition of the timepiece when a backlight thereof is lit up, Fig. 6 is a schematic perspective view showing a display condition of the timepiece when the backlight thereof is not lit up.
Fig. 7 is a schematic perspective view showing a configuration of a digital display portion of a conventional timepiece by way of example. Fig. 8 is a schematic perspective view showing a display condition of the conventional timepiece when a backlight thereof is lit up, and Fig. 9 is a schematic perspective view showing a display condition of the conventional timepiece when the backlight thereof is not lit up.

### BEST MODE FOR CARRYING OUT THE INVENTION

Preferred embodiments of a timepiece according to the invention will be described in detail hereinafter with reference to the attached drawings.

### First Embodiment

First, a first embodiment of a timepiece according to the invention will be described with reference to Figs. 1 to 3.

Fig. 1 is a schematic perspective view showing a configuration of a digital display portion of the timepiece, and Fig. 2 is a view showing a display condition of the timepiece when a backlight thereof is lit up while Fig. 3 is a view showing a display condition thereof when the backlight is not lit up.

As shown in Fig. 1, a first substrate 1, and a second substrate 4, respectively made of glass 0.5 mm thick, are stuck with each other by providing a sealant (not shown) around the periphery of substrates, and a TN liquid crystal layer 5 having a twist angle of 90 degrees is sealed in a gap formed between the respective substrates, and is sandwiched therebetween, thereby making up a liquid crystal display panel 10. A display electrode and an opposite electrode (both, not shown in the figure), made up of a transparent conductive ITO film, are respectively formed on inner surfaces of the first substrate 1 and the second substrate 4, facing each other.

An absorption-type polarizing film 2 as a first polarizing film is disposed on the outer side of the first substrate 1 installed on the visible side of the liquid crystal display panel 10, and a reflection-type polarizing film 3 as a second polarizing film is disposed on the outer side of the second substrate 4.

The absorption-type polarizing film 2 is a sheet-like member absorbing the light linearly polarized in the direction orthogonal to the transmission axis thereof. For example, a polarizing film composed of dyed PVA (polyvinyl alcohol) stretched with iodine, and sandwiched between TAC (triacetyl cellulose) films, having a transmittance at 46 % is used. This film has relatively high transmittance among common polarizing films.

The absorption-type polarizing film 2 is disposed such that the direction of the long axes of liquid crystal molecules located on the visible side of the TN liquid crystal layer 5 of the liquid crystal display panel 10 (on the side of the first substrate 1) is aligned parallel with the transmission axis 2a of the absorption-type polarizing film 2.

The reflection-type polarizing film 3 is a sheet-like member reflecting the light linearly polarized in the direction orthogonal to the transmission axis thereof, and is composed of a plurality of laminated thin films which are formed on a base film. For example, D - BEF (trade name), marketed by Sumitomo 3M Co., Ltd., is used for the reflection-type polarizing film 3.

By use of the reflection-type polarizing film, the light conventionally absorbed by the absorption-type polarizing film can be reflected.

The reflection-type polarizing film 3 is disposed such that the direction of the long axes of liquid crystal molecules located on a side of the TN liquid crystal layer 5, opposite from the visible side of the liquid crystal display panel 10 (on the side of the second substrate 4), is aligned orthogonal to the transmission axis 3a (that is, in parallel with the reflection axis 3b) of the reflection-type polarizing film 3.

A backlight 8 comprising 2 units of red LEDs 7 and a light diffusing layer 6 for diffusing light emitted from the red LEDs 7 is disposed on a side of the reflection-type polarizing film 3, opposite from the visible side.

A thick plate made of polycarbonate or acrylic resin, a thick paper, a coated film made up of a transparent adhesive with silica grains or acrylic grains diffused therein, or the like, that exhibits light-diffusibility, is used for the light diffusing layer 6. An embossing treatment is applied on the surface thereto as necessary in order to enhance further light diffusibility. In this embodiment, an acrylic thick plate 3 mm in thickness is adopted.

In this embodiment, if the absorption-type polarizing film 2 and the reflection-type polarizing film 3 are disposed such that the directions of respective axes are as shown in Fig. 1, a display mode is effected wherein transmission display of letters such as time information, and so forth is indicated in a reflected background part under the so-called normally reflection display. Such display will be described in more detail hereinafter.

Fig. 2 shows a display condition when the backlight is lit up.

When the red LEDs 7 of the backlight are lit up, a light component linearly polarlized in the direction parallel to the transmission axis 3a of the reflection-type polarizing film 3, out of light emitted from the red LEDs 7, is transmitted through the reflection-type polarizing film 3, incident on the liquid crystal display panel 10.

Since display letters 11 shown in Fig. 2 represent portions of the liquid crystal display panel 10, where a voltage is applied between the electrodes (not shown), the linearly polarized light transmitted through the reflection-type polarizing film 3 is transmitted through the TN liquid crystal layer 5 without being twisted, and then transmitted through the absorption-type polarizing film 2 as the light linearly polarized in the direction parallel to the transmission axis 2a thereof, reaching the visible side, so that red emitted-light display is effected.

On the other hand, in the background part 12 shown in Fig. 2, representing a portion of the liquid crystal display panel 10 in Fig. 1, where no voltage is applied between the electrodes, the linearly polarized light which has been transmitted through the reflection-type polarizing film 3 is twisted by 90 degrees when transmitted through the TN liquid crystal layer 5, and consequently, turns into the light linearly polarized in the direction orthogonal to the transmission axis 2a of the absorption-type polarizing film 2. Accordingly, the light linearly polarized as above is absorbed by the absorption-type polarizing film 2, thereby effecting display in black.

Thus, with the configuration as shown in Fig. 1, when the backlight 8 is lit up, emitted light from the red LEDs 7 is transmitted through the portions of the display letters 11 only, so that letters are displayed by the emitted light in red within the background part indicated in black.

Next, a condition when the backlight is not lit up is described hereinafter.

Fig. 3 shows a display condition when the backlight is not lit up. With the configuration as shown in Fig. 1, if the red LEDs 7 of the backlight 8 are not lit up, a light component linearly polarized in the direction parallel to the transmission axis 2a of the absorption-type polarizing film 2, out of external light incident from the visible side of the liquid crystal display panel 10, is transmitted through the absorption-type polarizing film 2.

Since display letters 21 shown in Fig. 3 represent the portions of the liquid crystal display panel 10 in Fig. 1, where a voltage is applied between the electrodes, the linearly polarized light transmitted through the absorption-type polarizing film 2 is transmitted through the TN liquid crystal layer 5 without being twisted. Accordingly, the linearly polarized light as described is transmitted through the reflection-type polarizing film 3 as the light linearly polarized in the direction parallel to the transmission axis 3a of the reflection-type polarizing film 3, and reaches the light diffusing layer 6 disposed over the backlight 8.

The linearly polarized light as above and incident on the light diffusing layer 6 is simply scattered in the backward direction, that is, simply diffused in the direction of the red LEDs 7, and since there is not disposed a reflection layer exhibiting a strong reflectivity underneath the light diffusing layer 6, display in black is effected.

On the other hand, in a background part 22 shown in Fig. 3, representing the portion of the liquid crystal display panel 10, where no voltage is applied between the electrodes, the linearly polarized light transmitted through the absorption-type polarizing film 2 is twisted by 90 degrees when it is transmitted through the TN liquid crystal layer 5, and consequently, turns into the light linearly polarized in the direction orthogonal to the transmission axis 3a of the reflection-type polarizing film 3. Accordingly, the light linearly polarized as above is reflected fully by the reflection-type polarizing film 3, and sent back towards the visible side as it is, so that the background part 22 is displayed in a white metallic tone.

Thus, in a state wherein the backlight is not lit up, the portions of the display letters are displayed in black, and the background part is displayed in white.

With this embodiment of the invention, as the background will be in a display condition wherein light is reflected by the reflection-type polarizing film 3, the display condition thereof becomes visually recognizable even when the LEDs are turned off. In the conventional case wherein the absorption-type polarizing film is used, the background is displayed in black, however, with the embodiment of the invention, it is possible to display the background in a white metallic tone.

Although, with this embodiment, the LEDs are used as a light source of the backlight, a fluorescent tube such as a cold cathode tube, a hot cathode tube, or the like may be used instead.

If priority is to be given to the power consumption over the brightness, an electro-luminescence light may be used. As it is a surface-emitting light source, uniform illumination can be provided thereby across a whole area, so that the light diffusing layer 6 may be dispensed with.

Further, with this embodiment, a light diffusing layer is not disposed between the reflection-type polarizing film 3 and the second substrate 4, however, if the light diffusing layer is disposed therebetween, light subjected to specular reflection by the reflection-type polarizing film 3 can be diffused, thereby indicating display in a softer tone, so that dependence on a viewing angle is lessened.

With this embodiment, a common polarizing film is used for the absorption-type polarizing film 2, however, a color polarizing film using a dichroic pigment may be employed instead, so that the letters can be colored even at the time of viewing by use of external light.

In carrying out this embodiment, the red LEDs are used as the light source of the backlight 8, however, it is obvious that the same effect can be obtained regardless of whether a LED color is green or blue.

Furthermore, with this embodiment, a white light diffusing layer is used for the light diffusing layer 6, however, a color filter may be used instead for the light diffusing layer 6. Further, if a color filter for transmitting and scattering a light component having a wavelength substantially equivalent to that of the emitted light from the LEDs is used, light components other than that are absorbed, so that contrast at the time of viewing by use of external light can be further enhanced.

In this embodiment, if the transmission axis 2a of the absorption-type polarizing film 2 is substantially parallel to or orthogonal to the direction of the long axes of liquid crystal molecules located on the visible side of the TN liquid crystal layer 5 of the liquid crystal display panel 10, this will be sufficient. And if the transmission axis 3a of the reflection-type polarizing film 3 is substantially parallel to or orthogonal to the direction of the long axes of liquid crystal molecules located on the backlight side of the TN liquid crystal layer 5 of the liquid crystal display panel 10, this will be sufficient.

When either one of the axes is disposed by rotating it by 90 degrees, display can be reversed between white and black.

### Second Embodiment

Next, a second embodiment of a timepiece according to the invention will be described with reference to Figs. 4 to 6.

Fig. 4 is a schematic perspective view showing a configuration of a digital display portion of the timepiece. In Fig. 4, parts corresponding to those in Fig. 1 are denoted by the same reference numerals, and description thereof is omitted.

In this embodiment of the invention, a STN liquid crystal layer 15, having a twist angle ranging 180 degrees to 270 degrees, is sealed in a gap formed between a first substrate 1 and a second substrate 4, and is sandwiched therebetween, thereby making up a liquid crystal display panel 20.

Further, a retardation film 9 is disposed on the visible side of the first substrate 1 of the liquid crystal display panel 20, and an absorption-type polarizing film 2 is disposed on top of the retardation film 9. As with the case of the first embodiment a reflection-type polarizing film 3 and a backlight 8 comprising a light diffusing layer 6 and red LEDs 7 are disposed on a side of the second substrate 4, opposite from the visible side.

The retardation film 9 and the absorption-type polarizing film 2 as well as the reflection-type polarizing film 3 are disposed on each side of the liquid crystal display panel 20, respectively, such that an angular alignment relationship among the STN liquid crystal layer 15, the retardation film 9, and the transmission axis 2a of the absorption-type polarizing film 2, and the same between the STN liquid crystal layer 15 and the transmission axis 3a (or the reflection axis 3b) of the reflection-type polarizing film 3 are optimally arranged taking into consideration spectral characteristic and transmittance. In this case, the reflection-type polarizing film 3 is disposed such that the transmission axis 2a of the absorption-type polarizing film 2 and the transmission axis 3a of the reflection-type polarizing film 3 are aligned in the same direction on the basis of the normally-black display condition in the case of a conventional configuration wherein an absorption-type polarizing film is used in place of the reflection-type polarizing film.

Now, a display condition of this embodiment will be described hereinafter. Fig. 5 shows a display condition when the backlight is lit up.

When the red LEDs 7 of the backlight 8 in Fig. 4 are lit up, a light component linearly polarlized in the direction parallel to the transmission axis 3a of the reflection-type polarizing film 3, out of light emitted from the red LEDs 7, is transmitted through the reflection-type polarizing film 3, incident on the liquid crystal display panel 20.

Since display letters 31 shown in Fig. 5 represent portions of the liquid crystal display panel 20 in Fig. 4, where a voltage is applied between the electrodes (not shown), the linearly polarized light transmitted through the reflection-type polarizing film 3 is transmitted through the STN liquid crystal layer 15 without being twisted, and then transmitted through the absorption-type polarizing film 2 as the light linearly polarized in the direction parallel to the transmission axis 2a of the absorption-type polarizing film 2, reaching the visible side. Accordingly, the display letters 31 are indicated in display by red emitted light

On the other hand, in a background part 32 shown in Fig. 5, representing a portion of the liquid crystal display panel 20 in Fig. 4, where no voltage is applied between the electrodes, the linearly polarized light which is transmitted through the reflection-type polarizing film 3 is twisted when transmitted through the STN liquid crystal layer 15, so as to turn into the light linearly polarized in the direction orthogonal to the transmission axis 2a of the absorption-type polarizing film 2, and consequently, is absorbed by the absorption-type polarizing film 2, thereby effecting display in black.

Accordingly, when the backlight 8 is lit up, emitted light from the red LEDs 7 is transmitted through the portions of the display letters 31 only shown in Fig. 5, so that the letters are indicated in display by red emitted light.

Next, a condition when the backlight is not lit up is described hereinafter. Fig. 6 shows a display condition when the backlight is not lit up.

When the red LEDs 7 of the backlight 8 in Fig. 4 are not lit up, a light component linearly polarized in the direction parallel to the transmission axis 2a of the absorption-type polarizing film 2, out of external light incident on the visible side of the liquid crystal display panel 20, is transmitted through the absorption-type polarizing film 2, thus incident on the liquid crystal display panel 20.

Since display letters 41 shown in Fig. 6 represent portions of the liquid crystal display panel 20, where a voltage is applied between the electrodes, the linearly polarized light transmitted trough the absorption-type polarizing film 2 is transmitted trough the STN liquid crystal layer 15 without being twisted. Accordingly, the linearly polarized light as described is transmitted trough the reflection-type polarizing film 3 and reaches the light diffusing layer 6 disposed over the backlight 8.

The linearly polarized light incident on the light diffusing layer 6 is simply scattered in the backward direction, that is, diffused in the direction of the red LEDs 7, and since there is not disposed a reflection layer exhibiting a strong reflectivity underneath the light diffusing layer 6, display in black is indicated.

In a background part 42 shown in Fig. 6, representing a portion of the liquid crystal display panel 20 in Fig. 4, where no voltage is applied between the electrodes, the linearly polarized light which is transmitted through the absorption-type polarizing film 2 is twisted when transmitted through the STN liquid crystal layer 15, and accordingly, is turned into the linearly polarized light in the direction orthogonal to the transmission axis 3a of the reflection-type polarizing film 3. Consequently, the linearly polarized light as above is reflected in full by the reflection-type polarizing film 3, and sent back to the visible side as it is, so that the background part 42 is displayed in a white metallic tone.

Thus, with the configuration shown in Fig. 4, in a state wherein the backlight is not lit up, the background part 42 is displayed in a metallic tone, and the portions of the display letters 41 are displayed in black.

According to this embodiment of the invention, as the background is indicated in a display condition exhibiting a reflection characteristic, the display condition thereof becomes visually recognizable even when the LEDs are turned off. Furthermore, in the case wherein the absorption-type polarizing film is used in the conventional way, the background is displayed in black, however, according to the embodiment of the invention, it is possible to indicate the background in a white color, effecting display with good contrast.

Various modifications to the invention as previously described with reference to the first embodiment are also applicable to the second embodiment.

With the two embodiments of the invention as described above, a single absorption-type polarizing film is used for the first polarizing film disposed on the visible side of the liquid crystal display panel, and a single reflection-type polarizing film is used for the second polarizing film disposed on the backlight side. However, a plurality of the respective polarizing films may be disposed on both sides.

Further, the first polarizing film is not limited to an absorption-type polarizing film, but may be a reflection-type polarizing film, or may be made up of an absorption-type polarizing film in combination with a reflection-type polarizing film.

The second polarizing film may also be made up of a reflection-type polarizing film in combination with an absorption-type polarizing film.

### INDUSTRIAL APPLICABILITY

As described in the foregoing, with the timepiece according to the invention, provided with the absorption-type polarizing film, the liquid crystal display panel, the reflection-type polarizing film, and the backlight, it is possible to display time information and calendar information with contrast sufficient to visually recognize the display condition thereof in both a state wherein the backlight is not lit up and a state wherein the backlight is lit up. By applying the invention to various digital timepieces such wrist watches, desk clocks, and so forth, it is possible to enhance considerably visibility of display, to reduce significantly frequency at which the backlight need be put to use, and to decrease consumption of a battery.

## Claims

1. A timepiece comprising:
a liquid crystal display panel, made up of a liquid crystal layer sealed in a gap formed between a first substrate and a second substrate, both transparent, with an electrode formed on each of inner surfaces thereof, facing each other; and capable of displaying at least either time information or calendar information;
a first polarizing film disposed on the outer side of the first substrate disposed on the visible side of the liquid crystal display panel;
a second polarizing film disposed on the outer side of the second substrate; and
a backlight disposed on a side of the second polarizing film, opposite from the visible side,
wherein the first polarizing film is made up of an absorption-type polarizing film absorbing the light linearly polarized in the direction orthogonal to the transmission axis thereof, a reflection-type polarizing film reflecting the light linearly polarized in the direction orthogonal to the transmission axis thereof, or the absorption-type polarizing film in combination with the reflection-type polarizing film, and
the second polarizing film is made up of the reflection-type polarizing film or the absorption-type polarizing film in combination with the reflection-type polarizing film.

2. A timepiece comprising:
a liquid crystal display panel, made up of a liquid crystal layer sealed in a gap formed between a first substrate and a second substrate, both transparent, with an electrode formed on each of inner surfaces thereof, facing each other; and capable of displaying at least either time information or calendar information;
a first polarizing film disposed on the outer side of the first substrate disposed on the visible side of the liquid crystal display panel;
a second polarizing film disposed on the outer side of the second substrate; and
a backlight disposed on a side of the second polarizing film, opposite from the visible side,
wherein the first polarizing film is an absorption-type polarizing film absorbing the light linearly polarized in the direction orthogonal to the transmission axis thereof, and
the second polarizing film is a reflection-type polarizing film reflecting the light linearly polarized in the direction orthogonal to the transmission axis thereof.

3. A timepiece according to Claim 2,
wherein the liquid crystal layer sealed in the gap formed between the first substrate and the second substrate is composed of twisted nematic liquid crystals having a twist angle not greater than 90 degrees, and
the absorption-type polarizing film is disposed relative to the liquid crystal display panel such that the transmission axis thereof is aligned substantially parallel or orthogonal to the direction of the long axes of liquid crystal molecules, located on the visible side of the twisted nematic liquid crystals
while the reflection-type polarizing film is disposed relative to the liquid crystal display panel such that the transmission axis thereof is aligned substantially parallel or orthogonal to the direction of the long axes of liquid crystal molecules, located on the backlight side of the twisted nematic liquid crystals.

4. A timepiece according to Claim 2,
wherein the liquid crystal layer sealed in the gap formed between the first substrate and the second substrate is composed of supertwisted nematic liquid crystals having a twist angle ranging 180 degrees to 270 degrees, and
a retardation film is disposed between the first substrate of the liquid crystal display panel and the absorption-type polarizing film.

5. A timepiece according to Claim 2, wherein a light diffusing layer is disposed on the liquid crystal display panel side of the reflection-type polarizing film.

6. A timepiece according to Claim 3, wherein a light diffusing layer is disposed on the liquid crystal display panel side of the reflection-type polarizing film.

7. A timepiece according to Claim 4, wherein a light diffusing layer is disposed on the liquid crystal display panel side of the reflection-type polarizing film.

8. A timepiece according to Claim 2, wherein the absorption-type polarizing film is a color polarizing film using a dichroic pigment.

9. A timepiece according to Claim 3, wherein the absorption-type polarizing film is a color polarizing film using a dichroic pigment

10. A timepiece according to Claim 4, wherein the absorption-type polarizing film is a color polarizing film using a dichroic pigment.

11. A timepiece according to Claim 2, wherein the backlight is made up of a light source such as light emitting diodes, an electroluminescence light, or the like, and a light diffusing layer for diffusing light emitted by the light source.

12. A timepiece according to Claim 3, wherein the backlight is made up of a light source such as light emitting diodes, an electroluminescence light, or the like, and a light diffusing layer for diffusing light emitted by the light source.

13. A timepiece according to Claim 4, wherein the backlight is made up of a light source such as light emitting diodes, an electroluminescence light, or the like, and a light diffusing layer for diffusing light emitted by the light source.

14. A timepiece according to Claim 11, wherein the light diffusing layer is made up of a coated film comprised of a transparent adhesive with silica grains or acrylic grains diffused therein.

15. A timepiece according to Claim 12, wherein the light diffusing layer is made up of a coated film comprised of a transparent adhesive with silica grains or acrylic grains diffused therein.

16. A timepiece according to Claim 13, wherein the light diffusing layer is made up of a coated film comprised of a transparent adhesive with silica grains or acrylic grains diffused therein.

17. A timepiece according to Claim 11, wherein the light diffusing layer is a color filter.

18. A timepiece according to Claim 12, wherein the light diffusing layer is a color filter.

19. A timepiece according to Claim 13, wherein the light diffusing layer is a color filter.
